(19) Europäisches Patentamt
European Patent Office
Office européen des brevets

(11) Veröffentlichungsnummer: **0 201 710**
**B1**

(12) # EUROPÄISCHE PATENTSCHRIFT

(45) Veröffentlichungstag der Patentschrift: **17.11.88**

(51) Int. Cl.⁴: **C 08 G 18/65**, C 08 G 18/32, C 08 J 5/24

(21) Anmeldenummer: **86104675.3**

(22) Anmeldetag: **05.04.86**

(54) **Matrixwerkstoffe, Verfahren zu ihrer Herstellung und ihre Verwendung zur Herstellung von Verbundwerkstoffen.**

(30) Priorität: **18.04.85 DE 3513980**

(43) Veröffentlichungstag der Anmeldung: **20.11.86 Patentblatt 86/47**

(45) Bekanntmachung des Hinweises auf die Patenterteilung: **17.11.88 Patentblatt 88/46**

(84) Benannte Vertragsstaaten: **DE FR GB IT**

(56) Entgegenhaltungen:
**FR - A - 1 518 546**
**GB - A - 1 159 213**

(73) Patentinhaber: **BAYER AG, Konzernverwaltung RP Patentabteilung, D-5090 Leverkusen 1 Bayerwerk (DE)**

(72) Erfinder: **von Bonin, Wulf, Dr., Mendelssohnstrasse 30, D-5090 Leverkusen 1 (DE)**
Erfinder: **Blahak, Johannes, Dr., Bodelschwinghstrasse 25, D-4150 Krefeld (DE)**
Erfinder: **von Gizycki, Ulrich, Dr., Wiembachallee 24, D-5090 Leverkusen 3 (DE)**
Erfinder: **Preis, Lothar, Dr., August-Kierspel-Strasse 42, D-5060 Bergisch Gladbach (DE)**

EP 0 201 710 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der Erfindung sind gefüllte und ungefüllte Matrixwerkstoffe, die im wesentlichen aromatische Polyurethane aus Bisphenolen, aromatischen Polyisocyanaten und Weichsegmentbildnern darstellen, einen mindestens zweiphasigen Aufbau aufweisen und zur Herstellung von Verbundwerkstoffen mit technisch vorteilhaftem Eigenschaftsprofil, insbesondere hohen Martensgraden und für gefüllte Werkstoffe günstigen Reissdehnungen, verwendet werden.

Weiterer Erfindungsgegenstand ist ein Verfahren zur Herstellung der Matrixwerkstoffe, sowie ihre Verwendung zur Herstellung von Verbundwerkstoffen, insbesondere zum Tränken von Fasermatten, Wickelkörpern, Rovings oder Fasersträngen und Ausheizen der, gegebenenfalls in Prepreg-Form vorliegenden, getränkten Massen bei erhöhten Temperaturen.

Polyurethane sind bereits als Werkstoffe in die Technik eingeführt, obgleich bekannt ist, dass die Urethanbindung zur Rückspaltung bei erhöhten Temperaturen neigt. Es hat sich jedoch gezeigt, dass die aliphatischen Polyurethane stabil genug sind, um zum Aufbau thermoplastisch verarbeitbarer Werkstoffe zu dienen, wohingegen die aromatischen Polyurethane als für derartige Zwecke weniger geeignet einzustufen sind, weil die aromatische Urethanbindung thermolabiler ist. Aufgrund dieser Labilität sind sogar solche aromatischen Urethane, z.B. Umsetzungsprodukte aus Phenol und aromatischen Polyisocyanaten als thermische Isocyanatabspalter in Gebrauch, d.h. das Phenol wird, wie auch das Polyisocyanat, aus dem aromatischen Urethan bei Temperaturen um 140°C wieder abgespalten.

Es wurde nun gefunden, dass im Gegensatz zu diesem Stand der Kenntnisse es dennoch überraschenderweise möglich ist, durch Umsetzung von mehrfunktionellen, vorzugsweise bifunktionellen Phenolen und mehrfunktionellen aromatischen Isocyanaten in Gegenwart bestimmter Weichsegmentbildner zu polymeren, durch Urethanbindungen verknüpften Kunststoffen zu gelangen, die auch im Temperaturbereich oberhalb 140°C vorzügliche Gebrauchseigenschaften, beispielsweise Matensgrade über 170°C, besitzen. Diese Weichsegmentbildner können aliphatischen, araliphatischen oder aromatischen Charakter haben. Erfindungsgemäss sind aber nur solche Weichsegmentbildner geeignet, die zur Bildung eines mindestens zweiphasigen Reaktionsproduktes führen, welches zumeist opakes bis undurchsichtiges Aussehen hat; dies wird durch bestimmte aliphatische Gruppen im Weichsegmentbildner bewirkt.

Die im erfindungsgemässen Verfahren erhältlichen Polyurethane sind technisch vorteilhaft, weil sie einerseits hohe Wärmestandfestigkeiten, gute Zugfestigkeiten und befriedigende Schlagzähigkeiten und andererseits eine Bruchdehnung in der Grössenordnung von 6%, vorzugsweise um 5 - 7% haben, wie sie für ein hochwertiges Matrixmaterial für Faserverbundwerkstoffe gefordert wird. Materialien, die diese Eigenschaftskombination mit der Herstellbarkeit aus einfach zugänglichen und technisch preiswert zur Verfügung stehenden Vorprodukten verbinden, sind bisher nicht zugänglich gewesen.

Gegenstand der Erfindung ist somit ein Verfahren zur Herstellung von Matrixwerkstoffen oder Formkörpern auf Polyurethanbasis, durch Umsetzung von

A) mindestens bifunktionellen Phenolen, vorzugsweise Mehrkernbisphenolen, mit

B) mindestens difunktionellen aromatischen Isocyanaten, vorzugsweise technischen MDI-Gemischen, sowie

C) 1 bis 40 Gew.-%, bezogen auf A) + C), an gegenüber Isocyanaten reaktionsfähige Gruppen aufweisenden Weichsegmentbildnern mit Molekulargewichten von 800 bis 10 000, welche mindestens 6 Alkylengruppen mit $\geqq$ 6 C-Atomen enthalten und welche im Verlauf ihrer Umsetzung mit A) und B) zu einer mindestens zweiphasigen Polymermatrix führen, gegebenenfalls unter Mitverwendung von

D) Fasern und Füllstoffen, sowie weiteren, üblichen Zusatzstoffen der Polyurethanchemie,

wobei die Komponenten A) + B) + C) im geschmolzenen oder gelösten Zustand und gegebenenfalls unter Zusatz von Fasern, Füllstoffen und anderen üblichen Zusatzstoffen, in solchen Mengen vermischt werden, dass gegenüber den Isocyanat-reaktiven Gruppen in A) + C) die NCO-Gruppen aus B) 90 bis 130 Äquivalentprozent betragen, das Gemisch gegebenenfalls in Formen gefüllt und anschliessend bei erhöhten Temperaturen, vorzugsweise 140°C bis 220°C, zur Ausreaktion gebracht und die Formkörper gegebenenfalls bei 140°C bis 220°C getempert werden.

Gegenstand der Erfindung sind auch die so erhaltenen, gegebenenfalls gefüllten Matrixwerkstoffe.

Vorzugsweise werden als Weichsegmentbildner C) solche auf Basis von Dimerfettsäurepolyestern verwendet und mit Mehrkernbisphenolen A) sowie mit einer mindestens stöchiometrischen Menge an aromatischen Polyisocyanaten B), insbesondere aromatischen Mehrkernpolyisocyanaten, vorzugsweise solchen auf der Basis von Phosgenierungsprodukten von Anilin-Formaldehyd-Kondensaten, umgesetzt.

Gegenstand der Erfindung ist weiterhin die Verwendung der vorzugsweise mit Fasern und/oder Füllstoffen gefüllten Matrixwerkstoffe zur Herstellung von Formteilen und Konstruktionselementen. Die so erhaltenen Verbundwerkstoffe werden vorzugsweise bei Temperaturen von 140°C bis 220°C (vorzugsweise bis 200°C) zur Erzielung ihrer maximalen Eigenschaften getempert.

Erfindungsgegenstand ist ferner die Verwendung einer Mischung wie oben definierter flüssiger Reaktionskomponenten A), B) und C), gegebenenfalls mit Fasern, Füllstoffen und üblichen Zusatzmitteln, oder einer Schmelze des noch nicht voll ausreagierten Reaktionsgemisches aus A), B) und C) zur Herstellung von Verbundwerkstoffen durch Tränken von Fasermatten, Wickelkörpern, Rovings oder Fasersträngen und Verformung der gegebenenfalls in Prepreg-Form vorliegenden Massen, thermische Aushärtung und gegebenenfalls Temperung bei Temperaturen von 140°C bis 220°C.

Im Rahmen der Erfindung werden als Füllstoffe z.B. organische und/oder anorganische Fasern beliebiger Länge und Geometrie verstanden, wie Glasfasern, C-Fasern, Kaolinfasern, Carbide in Faserform, Quarzfasern, Asbestfasern, Metallfasern, Korundfasern, Aramidfasern oder andere hochtemperaturbeständige Fasern; ferner auch pulverförmige, blättchen- oder hantel- bzw. kugelförmige, gegebenenfalls auch hohlperlenförmige oder schaumartige Füllstoffteilchen bzw. deren Gemische.

Hierbei kann es sich um organische oder anorganische Füllstoffe handeln, z.B. aromatische Polyimide, Graphit, Russ, Flugaschen, Glimmer, Glas oder Glashohlperlen, Sand, Mineral- bzw. Gesteinsmehle, Metallpulver, Ferrite, Oxide und weitere, an sich bekannte Füllstoffe.

Als Komponente A) werden erfindungsgemäss aromatische Verbindungen eingesetzt, die mindestens zwei phenolische OH-Gruppen enthalten, wie Hydrochinon oder Resorcin, vorzugsweise aber bifunktionelle Mehrkernpenole der allgemeinen Formel

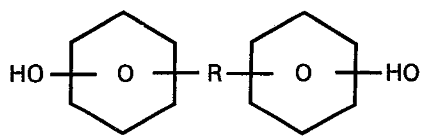

in der R eine einfache Bindung oder ein mindestens zweiwertiger Rest ist, wie etwa -O- oder -S-, -SO-, $-SO_2-$, -NR'- (R' = H oder aliphatischer oder aromatischer Rest, wie $-CH_3$ oder $-C_6H_5$); $-Si(R'')_2-$, -CO-, -O(CO)O-, -NN-, -CHR'-, -R'CR'-, wie $-CH_2-$, $-CHCH_3-$, oder $-CH_3CCH_3-$, $-C_6H_4-$, $-OC_6H_4O-$, $-O(C_6H_4R'''O)_n-$, $-O(POCH_3)O-$, $-O(POC_6H_5)O-$, $-O(COC_6H_4R'''O)_n-$ (R'' = aliphatischer, cycloaliphatischer oder aromatischer Rest, vorzugsweise $-CH_3$ oder $-C_6H_5$; R''' = Alkylen, Cycloalkylen oder Arylen; n = 1, 2 oder 3, vorzugsweise 1).

Es kommen jedoch auch andere Bisphenole in Betracht, etwa solche vom Phenolphthaleintyp oder solche auf heterocyclischer Basis, wie etwa 3,6-Dihydroxy-9,9-dimethylxanthen, N,N'-Bishydroxyphenyl-pyromellithsäurebisimid oder Bis-hydroxytetramethyl-spiroindan.

Auch Gemische verschiedener Polyphenole können im erfindungsgemässen Verfahren eingesetzt werden.

Die Verwendung von mehr als bifunktionellen Phenolen ist ebenfalls, zumindest in untergeordneten Mengen, vorzugsweise bis 15 Gew.-%, in Betracht zu ziehen.

Bevorzugt werden Bisphenole mit Schmelzpunkten unter 200°C, insbesondere aus der Reihe des leicht zugänglichen 4,4'-Dihydroxy-diphenylpropans, des 4,4'-Dihydroxydiphenylethers und des Dihydroxydiphenylsulfons bzw. deren Mischungen verwendet.

Als mindestens difunktionelle aromatische Isocyanate B) werden vorzugsweise 4,4'-Diisocyanatodiphenylmethan (MDI), insbesondere technische MDI-Typen verwendet, d.h. Polyisocyanate, die z.B. durch Phosgenierung von Anilin-Formaldehyd-Kondensaten erhalten werden und die Isomere des 4,4'-Diisocyanatodiphenylmethans, sowie mehrkernige Produkte enthalten. Es kommen aber auch andere aromatische di- und/oder polyfunktionelle Isocyanate in Betracht, wie etwa 4,4'-, 2,4'- und/oder 2,2'-Diisocyanatodiphenyl-ether, -ketone, -carbonate, -sulfone, -ethane, Bis(4-isocyanatophenoxy)-alkane (Alkanrest mit 2-6 C-Atomen) oder Naphthylendiisocyanate wie 1,5-Naphthylendiisocyanat oder auch (weniger bevorzugt) technische Toluylendiisocyanat(gemisch)e.

Es kommen auch Gemische derartiger Isocyanatkomponenten in Betracht.

Besonders bevorzugt werden im erfindungsgemässen Verfahren als Komponente A) das 4,4'-Dihydroxy-diphenylpropan und als Komponente B) technische Gemische von MDI eingesetzt.

Als Weichsegmentbildner werden erfindungsgemäss solche verwendet, die gegenüber Isocyanaten (z.B. durch OH-, primäre/sekundäre Amino- oder Carboxylgruppen, bevorzugt aber Hydroxylgruppen) reaktionsfähig sind und zur Ausbildung einer Mehrphasigkeit in der Harzmatrix führen. Derartige Weichsegmentbildner sind zunächst im Reaktionsgemisch löslich und führen im Laufe der Umsetzung schliesslich zu einem Mehrphasensystem, was sich darin zeigt, dass die Polymermatrix nicht mehr klar durchsichtig ist, sondern opak bis milchig trübe und undurchsichtig wird.

Geeignete, zur Mehrphasigkeit führende, langkettige, aliphatische Reste aufweisende Weichsegmentbildner C) sind solche, die mindestens 6 Alkylengruppen, mit vorzugsweise mindestens 9 C-Atome aufweisenden Ketten, enthalten, und gegenüber Isocyanat reactive Endgruppen besitzen. Beispiele hierfür sind OH-Gruppen aufweisende Oligomerisate oder Copolymerisate von ungesättigten Kohlenwasserstoffen mit mindestens 9 C-Atomen, z.B. Copolymerisate des Octadecens, (teilverseifte) Copolymerisate von Fettsäurevinylestern auf Basis von Carbonsäuren mit mindestens 9 C-Atomen (etwa von Vinyllaurat oder Vinylstearat), verseifte oder teilverseifte Copolymerisate von Ethylen oder sonstigen Olefinen mit Acryl- oder Vinylestern (wie Vinylacetat); (teilverseifte) Umesterungsprodukte von Olefin-Vinylester-Copolymerisaten mit Fettsäuren mit $\geqq$ 9 C-Atomen, OH-haltige Oligomere von epoxidierten Ölen, z.B. von epoxidiertem Sojaöl, OH-haltige Polymere und Oligomere von Acrylaten und/oder Methacrylaten mit Fettalkoholen mit $\geqq$ 9 C-Atomen; insbesondere Polyester auf Basis von dimerisierten und/oder trimerisierten Fettsäuren und langkettigen ($\geqq$ 6 C-Atome, vorzugsweise bis zu 18 C-Atome aufweisenden) Di- bzw. Polyolen wie z.B. der Hexandiol-1,6-Polyester der dimerisierten Ölsäure, mit Molekulargewichten von ca. 1200 bis 2500, insbesondere von ca, 1300 bis 1500.

Es kommen auch Gemische derartiger Weichsegmentbildner-Komponenten in Betracht.

Die Molekulargewichte der Weichsegmentbildner C) sollen 800 bis 10 000, vorzugsweise 1000 bis 5000, und die OH-Zahlen vorzugsweise 5 bis 500, insbesondere 25 bis 160, betragen. Besonders bevorzugt sind OH-Gruppen aufweisende Weichsegmentbildner.

Die Matrixharze bzw. die Verbundwerkstoffe der vorliegenden Erfindung werden vorzugsweise aus trockenen Ausgangsmaterialien unter wasserfreien Bedingungen hergestellt.

Im Gemisch aus mindestens bifunktionellem Phenol A) und Weichsegmentbildner C) soll letzterer in

Mengen von 1 bis 40 Gew.-%, vorzugsweise 3 bis 30 Gew.-%, insbesondere 5 bis 20 Gew.-%, enthalten sein.

In bezug auf die im Gemisch aus mindestens bifunktionellem Phenol A) und Weichsegmentbildner C) enthaltenen, gegenüber Isocyanat reaktiven (Zerewitinoff-aktiven) Gruppen, z.B. OH-Gruppen, sollen Polyisocyanatmengen von 90 bis 130%, vorzugsweise mindestens stöchiometrische ($\geqq$ 100%) Mengen, insbesondere 105 bis 120% der stöchiometrisch erforderlichen Mengen eingesetzt werden.

Als übliche Zusatzstoffe der Polyurethanchemie werden z.B. Katalysatoren, Stabilisatoren, Lichtschutzmittel, Gleitmittel, Silikone, Pigmente oder Farbstoffe verstanden.

Die Herstellung der neuen Matrixwerkstoffe bzw. der Formteile daraus geschieht prinzipiell durch Aufschmelzen bzw. Aufheizen (gegebenenfalls auch unter Verwendung von Lösungsmitteln) der Komponenten auf eine Temperatur, bei der alle Komponenten flüssig vorliegen, Vermischen der flüssigen Komponenten und Eingiessen in ein Formwerkzeug, in dem die Reaktion unter Verfestigung bei Temperaturen zwischen 140°C und 220°C, vorzugsweise 160°C und 200°C bei Temperungszeiten bis zu 50 Stunden erfolgt. Das Formwerkzeug ist zweckmässigerweise mit einem Trennmittel vorbehandelt, da die erfindungsgemässen Umsetzungsprodukte hervorragende Haftungen an den meisten Substraten besitzen und daher auch als Klebstoff verwendet werden können. Sollten Lösungen verwendet worden sein, wird das Lösungsmittel wieder entfernt.

Variationen des aufgezeigten Verfahrens bestehen darin, dass man die gewünschten Füllstoffe vor, während oder nach dem Aufschmelzen der Komponenten in einer oder mehreren der Komponenten verteilt und dann die Füllstoffe enthaltende Reaktionsmischung verformt und zur Ausreaktion bringt. Man kann auch die Mischung der aufgeschmolzenen Komponenten, also das Reaktionsgemisch, zum Tränken von Fasermatten, Wickelkörpern oder Rovings verwenden und diese dann verformen oder aushärten. Auch die Prepreg-Technik ist hier anwendbar.

Eine weitere Variante besteht darin, dass man die Füllstoffe enthaltende oder die füllstofffreie Reaktionsmischung vor der Gelierung, zumeist nach wenigen Minuten Reaktionszeit, auf Raumtemperatur abkühlt und so ein pulverisierbares, thermoplastisch verformbares Material erhält, das — gegebenenfalls nach Vermischen mit weiterem Füllstoff —, nach Auftragen auf geeignete Substrate oder nach Formgebung durch z.B. Heissverpressen ähnlich wie ein technisch üblicher Duroplast aufgeschmolzen oder erweicht und gegebenenfalls durch Temperung endgültig ausgehärtet werden kann. Auch Beschichtungsverfahren der Pulverlacktechnik sind durchführbar.

Obgleich eine Katalyse der Polyadditionsreaktion mit üblichen Katalysatoren der Polyurethanchemie, z.B. Säuren oder Basen, wie Aminen oder metallorganischen Katalysatoren durchaus möglich ist, kann auf deren Mitverwendung vorzugsweise verzichtet werden.

Die erfindungsgemässen Matrixharze (Matrixwerkstoffe) finden Verwendung als Tränkharze zur Herstellung von faserverstärkten Verbundwerkstoffen bzw. Formkörpern und Konstruktionselementen. Zur Herstellung von Beschichtungen werden Lösungen der Reaktionsgemische, z.B. mit Hilfe der Sprühtechnik oder Pulverlacktechnik auf metallische oder nichtmetallische Substrate aufgebracht. Sie können auch als Klebstoffe, als Sperrschichten oder Membranbildner für Gas- und Flüssigkeitstrennverfahren oder in Form von Schaumstoffen Verwendung finden.

Mit ihrer Hilfe lassen sich vor allem hochbeanspruchbare Verbundformkörper bzw. Konstruktionselemente für den Flugzeug- oder Fahrzeugbau herstellen sowie besonders stabile Basismaterialien für elektronische Gerätschaften.

Im folgenden soll die Erfindung beispielhaft erläutert werden. Die angegebenen Teile und Prozente beziehen sich auf das Gewicht, sofern nichts anderes vermerkt ist.

In den folgenden Versuchen wurde ein technisches Mehrkernpolyisocyanat verwendet, das auf Basis von Anilin-Formaldehydkondensaten hergestellt wurde und 30 - 32% NCO-Gruppen sowie max. 0,3% hydrolysierbares Chlor enthält.

Als Bisphenol wird technisches 4,4'-Dihydroxydiphenylpropan verwendet.

Als mehrphasenbildendes Weichsegment wird ein Polyester aus Hexandiol-1,6 und technischer dimerisierter Ölsäure (OHZ 85; SZ ca. 1; osmotisch ermitteltes Mol-Gew. ca. 1400) verwendet.

Als ein homogenes Polymer bildendes Weichsegment (zum Vergleich) wird ein Adipinsäure-Ethylenglykol-Polyester (OHZ 90; SZ ca. 9) verwendet.

Die im folgenden tabellarisch aufgeführten Beispiele zeigen den positiven Effekt überstöchiometrischer Isocyanatmengen sowie der Verwendung eines zu Zweiphasigkeit führenden Weichsegmentbildners.

Die Mischung aus Bisphenol und gegebenenfalls Weichsegmentbildner wurde bei 120°C im Vakuum entwässert und danach bei 160°C aufgeschmolzen. Dann wurde die auf 120°C vorgeheizte Isocyanatmenge hinzugerührt und innerhalb von 3 Minuten wurde das flüssige Reaktionsgemisch in eine mit einem Trennmittel auf Wachs- und Silikonbasis vorbehandelte Plattenform eingegossen. Die Form war auf 150°C vorgeheizt und wurde in gefülltem Zustand 3 h bei 180°C getempert, wobei das Reaktionsgemisch aushärtete. Nach dem Entformen wurden in den Vergleichsbeispielen klar durchsichtige, hellbraune Formkörper erhalten. Das erfindungsgemässe, zweiphasige Material bildete hellbräunlichgetrübte, undurchsichtige Platten.

Aus den Platten wurden Normkleinstäbe für die Prüfung der nachstehenden mechanischen Werte geschnitten.

| *Beispiele Nr.* | 1[x] | 2[x] | 3[x] | 4 | 5 | 6[x] | 7[x] | 8 |
|---|---|---|---|---|---|---|---|---|
| A) *Zusammensetzung* | | | | | | | | |
| Bisphenol (Teile) | 274 | 274 | 274 | 233 | 233 | 274 | 233 | 233 |
| Weichsegment, homogen (Teile) | - | - | - | - | - | - | 41 | - |
| Weichsegment, zweiphasig (Teile) | - | - | - | 41 | 41 | - | -- | 41 |
| Isocyanat (Teile) | 300 | 360 | 450 | 287 | 313 | 345 | 310 | 301 |
| Stöchiometrie in Äquivalent-% | 100 | 120 | 150 | 110 | 120 | 115 | 115 | 115 |
| B) *Eigenschaften* | | | | | | | | |
| Martensgrad in °C [a)] | 161 | 175 | 176 | 170 | 171 | 170 | 152 | 173 |
| Reissfestigkeit ($N/mm^2$) [b)] | 62,0 | 83,9 | - | 81,4 | 81,9 | 92,83 | 91,0 | 88,5 |
| E-Modul ($N/mm^2$) [c)] | 3290 | 3130 | 3170 | 2796 | 2810 | 3297 | 3896 | 3250 |
| Reissdehnung in % [d)] | 2,32 | 3,73 | 1,72 | 6,10 | 6,55 | 4,35 | 4,05 | 6,63 |
| Kugeldruckhärte ($N/mm^2$) [e)] | - | - | - | 146 | 245 | 201 | 187,2 | 176 |

x) Vergleichsbeispiele
a) nach DIN 53 458
b) nach DIN 53 455
c) nach DIN 53 457
d) nach DIN 53 455
e) nach DIN 53 456

Die Vergleichsbeispiele 1 bis 3 zeigen, dass man Formkörper mit hinreichend guten mechanischen Werten, jedoch geringer Reissdehnung erhält, wenn man keine Weichsegmentbildner bei den Matrixwerkstoffen einsetzt.

Vergleichsbeispiel 7 zeigt, dass einphasige Matrixwerkstoffe zu geringeren Martensgraden und geringen Reissdehnungen führen.

Beispiele 4, 5 und 8 zeigen, dass mittels der erfindungsgemäss Zweiphasigkeit herbeiführenden Weichsegmentbildner ausgezeichnete Kombinationen von Eigenschaften in den Formkörpern erzielt werden können, insbesondere die erfindungsgemäss besonders wertvollen Kombinationen hoher Martensgrade mit einer für die Praxis besonders wertvollen Reissdehnung um 6% in den Matrixwerkstoffen.

*Beispiel 9*

Die frisch hergestellte Reaktionsmischung gemäss Beispiel 8 wurde 3 Minuten bei 150°C gerührt, wobei eine zunehmende Viskosität den Beginn der Reaktion anzeigte. Dann wurde das Material auf eine Kühlwalze geführt, wo es erstarrte und in Schuppen abgezogen wurde.

Ein Teil der Schuppen wurde mit Quarzsand vermischt und nach 18wöchiger Lagerung bei 25°C auf einer Heizpresse bei 180°C zu einer Platte verpresst, die zu 75% aus Quarzfüllstoff besteht. Diese Platte kann Dauertemperaturen von 160°C ausgesetzt werden, ohne nach 3 Monaten mehr als 5% ihrer mechanischen Eigenschaften einzubüssen.

Ein anderer Teil der Schuppen wurde vermahlen und mit Silikat-Hohlperlen (∅ unter 0,3 mm) im Verhältnis 1:4 vermischt. Auf einer Heizpresse liess sich bei 180°C daraus (Presszeit 15 Min.) eine Platte mit einem spezifischen Gewicht von 0,45 $g/cm^3$ herstellen, die das gleiche Alterungsverhalten wie die Quarzmehl-gefüllte Platte zeigte.

Ein anderer Teil der Schuppen wurde zu einem Pulver mit Teilchengrösse unter 0,1 mm vermahlen und in ein Glasfaservlies eingerüttelt. Das Vlies wurde 1 Minute bei 125°C verpresst, wobei ein steifes Prepreg entstand, d.h. eine mit dem Harz verschmolzene steife Matte mit einem Harzanteil von ca. 50%. Aus dieser Matte liessen sich bei 185°C halbkugelige Schutzhauben pressen.

*Beispiel 10*

Ein geschmolzenes Reaktionsgemisch gemäss Beispiel 8 wurde auf einen Roving geleitet und man tränkte ihn in einer mit IR-Strahlern aufgeheizten Zone, bevor er zu einem Hohlkörper gewickelt wurde. Der Hohlkörper selbst wurde während des Wickelns dann durch Strahler bei etwa 150°C gehalten. Der fertige Hohlkörper hatte einen Harzanteil von ca. 35% und wurde 4 h bei 180°C ausgeheizt.

**Patentansprüche**

1. Verfahren zur Herstellung von Matrixwerkstoffen oder Formkörpern auf Polyurethanbasis, durch Umsetzung von

A) mindestens bifunktionellen Phenolen mit

B) mindestens difunktionellen aromatischen Isocyanaten, sowie

C) 1 bis 40 Gew.-%, bezogen auf A) + C), gegenüber Isocyanaten reaktionsfähige Gruppen besitzenden Weichsegmentbildnern mit Molekulargewichten von 800 bis 10 000, welche mindestens 6 Alkylgruppen mit ≧ 6 C-Atomen enthalten und welche im Verlauf ihrer Umsetzung mit A) und B) zu einer mindestens zweiphasigen Polymermatrix führen, gegebenenfalls unter Mitverwendung von

D) Fasern und Füllstoffen, sowie weiteren üblichen Zusatzstoffen der Polyurethanchemie,

wobei die Komponenten A) + B) + C) in geschmolzenem oder gelöstem Zustand und gegebenenfalls unter Zusatz von Fasern, Füllstoffen und anderen üblichen Zusatzstoffen in solchen Mengen vermischt werden, dass gegenüber den isocyanatreaktiven Gruppen von A) + C) 90 bis 130 Äquivalentprozent NCO-Gruppen aus B) vorliegen,

das Gemisch gegebenenfalls in Formen gefüllt und anschliessend bei erhöhten Temperaturen zur Ausreaktion gebracht und die Formkörper gegebenenfalls bei 140°C bis 220°C getempert werden.

2. Verfahren nach Anspruch 1, dadurch gekennzeichnet, dass als Komponente A)

bifunktionelle Mehrkernphenole der allgemeinen Formel

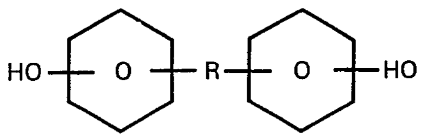

in der R eine einfache Bindung oder einen Rest -O-, -S-, -SO-, $-SO_2-$, -NR'-, $-Si(R'')_2-$, -CO-, -O(CO)O-, -NN-, -CHR'-, -R'CR'-, $-C_6H_4-$, $-OC_6H_4O-$ oder $-O(C_6H_4R'''O)_n-$, $-O(POCH_3)O-$, $-O(POC_6H_5)O-$, $-O(COC_6H_4R'''O)_n-$ darstellt, wobei

R' für H oder einen aliphatischen oder aromatischen Rest,

R'' für einen aliphatischen, cycloaliphatischen oder aromatischen Rest,

R''' für einen Alkylen-, Cycloalkylen- oder Arylenrest und

n für 1, 2 oder 3 stehen;

Bisphenole vom Phenolphthaleintyp, 3,6-Dihydroxy-9,9-dimethylxanthen, N,N'-Bishydroxyphenyl-pyromellithsäurebisimid oder Bis-hydroxytetramethyl-spiroindan oder deren Mischungen, gegebenenfalls zusammen mit bis zu 15 Gew.-% an mehr als bifunktionellen Phenolen, eingesetzt werden.

3. Verfahren nach Ansprüchen 1 oder 2, dadurch gekennzeichnet, dass man als Komponente A) Bisphenole mit Schmelzpunkten unter 200°C aus der Reihe des 4,4'-Dihydroxy-diphenyl-propans, des 4,4'-Dihydroxy-diphenylethers und des 4,4'-Dihydroxydiphenylsulfons oder deren Mischungen einsetzt.

4. Verfahren nach Ansprüchen 1 bis 3, dadurch gekennzeichnet, dass man als Komponente B) 4,4'-Diisocyanatodiphenylmethan und/oder durch Phosgenierung von Anilin-Formaldehyd-Kondensaten erhaltene technische Polyisocyanatgemische, 4,4'-, 2,4'- und/oder 2,2'-Diisocyanato-diphenylether, -diphenylketone, -diphenylcarbonate, -diphenylsulfone oder -diphenylethane, Bis-(4-isocyanatophenoxy)-alkane oder Naphthylendiisocyanate oder deren Gemische einsetzt.

5. Verfahren nach Ansprüchen 1 bis 4, dadurch gekennzeichnet, dass man als Komponente A) 4,4'-Dihydroxy-diphenylpropan und als Komponente B) technische Gemische von MDI einsetzt.

6. Verfahren nach Ansprüchen 1 bis 5, dadurch gekennzeichnet, dass man als Weichsegmentbildner C) 3 bis 30 Gew.-%, bezogen auf A) + C), aliphatische Ketten mit mindestens 9 C-Atome aufweisenden Verbindungen mit gegenüber Isocyanat reaktiven Endgruppen und Molekulargewichten von 1000 bis 5000, ausgewählt aus OH-Gruppen aufweisenden Oligomerisaten oder Copolymerisaten von ungesättigten Kohlenwasserstoffen mit mindestens 9 C-Atomen, gegebenenfalls teilverseiften Copolymerisaten von Fettsäurevinylestern auf Basis von Carbonsäuren mit mindestens 9 C-Atomen, verteiften oder teilverseiften Copolymerisaten von Ethylen und anderen Olefinen mit Acryl- oder Vinylestern, gegebenenfalls teilverseiften Umesterungsprodukten von Olefin-Vinylester-Copolymerisaten mit Fettsäuren mit ≧ 9 C-Atomen, OH-Gruppen aufweisenden Oligomeren von epoxidierten Ölen, OH-Gruppen aufweisenden Oligomeren und (Co)Polymeren von Acrylaten und/oder Methacrylaten von Fettalkoholen mit ≧ 9 C-Atomen sowie OH-Gruppen aufweisenden Polyestern aus di- und/oder trimerisierten Fettsäuren und ≧ 6 C-Atomen aufweisenden Di- und Polyolen, einsetzt.

7. Verfahren nach Ansprüchen 1 bis 6, dadurch gekennzeichnet, dass man als Weichsegmentbildner C) OH-Gruppen aufweisende Polyester aus dimerisierter Ölsäure und Hexandiol-1,6 mit Molekulargewichten von 1200 bis 2500 einsetzt.

8. Matrixwerkstoffe auf Polyurethanbasis, erhältlich nach den Verfahren der Ansprüche 1 bis 7.

9. Verwendung einer Mischung flüssiger Reaktionskomponenten A), B) und C) gemäss Anspruch 1, gegebenenfalls zusammen mit Füllstoffen und Zusatzmitteln, oder einer Schmelze des noch nicht ausreagierten Reaktionsgemisches aus A), B) und C) zur Herstellung von Verbundwerkstoffen durch Tränken von Fasermatten, Wickelkörpern, Rovings oder Fasersträngen und Verformung der gegebenenfalls in Prepreg-Form vorliegenden Massen sowie anschliessende thermische Aushärtung und gegebenenfalls Temperung bei Temperaturen von 140°C bis 220°C.

## Claims

1. Process for the production of matrix materials or mouldings based on polyurethane, by reacting

A) at least bifunctional phenols with

B) at least difunctional aromatic isocyanates and

C) 1 to 40% by weight, relative to A) + C), of soft segment formers which contain groups which are reactive towards isocyanates, have molecular weights from 800 to 10,000, contain at least 6 alkylene groups having ≥ C 6 atoms and result, during their reaction with A) and B), in an at least biphasal polymer matrix, if appropriate with co-use of

D) fibres and fillers, and also further customary additives of polyurethane chemistry,

components A) + B) + C) being mixed in the molten or dissolved state and if appropriate with addition of fibres, fillers and other customary additives, in amounts such that 90 to 130 equivalent percent of NCO groups from B) are present with respect to the isocyanate-reactive groups in A) + C),

introducing the mixture, if desired, into moulds and subsequently reacting to completion at elevated temperatures, and conditioning the mouldings, if appropriate, at 140 to 220°C.

2. Process according to Claim 1, characterized

in that, as component A), bifunctional multinuclear phenols of the general formula

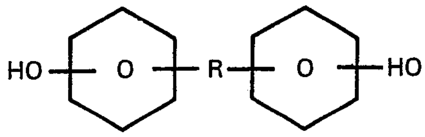

in which R represents a single bond or an -O-, -S-, -SO-, $-SO_2-$, -NR'-, $-Si(R'')_2-$, -CO-, -O(CO)O-, -NN-, -CHR'-, -R'CR'-, $-C_6H_4-$, $-OC_6H_4O-$ or $-O(C_6H_4R'''O)_n-$, $-O(POCH_3)O-$, $-O(POC_6H_5)O-$ or $-O(COC_6H_4R'''O)_n-$ radical, where

R' represents H or an aliphatic or aromatic radical,

R'' represents an aliphatic, cycloaliphatic or aromatic radical,

R''' represents an alkylene, cycloalkylene or arylene radical and

n represents 1, 2 or 3,

bisphenols of the phenolphthalein type 3,6-dihydroxy-9,9-dimethylxanthene, N,N'-bishydroxyphenyl-pyromellitic bisimide or bis-hydroxytetramethyl-spiroindane, or mixtures thereof, if appropriate together with up to 15% by weight of more than bifunctional phenols, are employed.

3. Process according to Claim 1 or 2, characterized in that, as component A), bisphenols having melting points below 200°C, from the series comprising 4,4'-dihydroxy-diphenylpropane, 4,4'-dihydroxydiphenyl ether and 4,4'-dihydroxydiphenyl sulphone, or mixtures thereof, are employed.

4. Process according to Claims 1 to 3, characterized in that, as component B), 4,4'-diisocyanatodiphenylmethane and/or industrial polyisocyanate mixtures obtained by phosgenation of aniline-formaldehyde condensates, 4,4'-, 2,4'- and/or 2,2'-diisocyanato-diphenyl ethers, -diphenyl ketones, -diphenyl carbonates, -diphenyl sulfones or -diphenyl ethanes, bis-(4-isocyanatophenoxy)-alkanes or naphthylene diisocyanates, or mixtures thereof, are employed.

5. Process according to Claims 1 to 4, characterized in that, as component A), 4,4'-dihydroxy-diphenylpropane is empolyed and, as component B), industrial mixtures of MDI are employed.

6. Process according to Claims 1 to 5, characterized in that, as soft segment former C), 3 to 30% by weight, relative to A) + C), of compounds containing aliphatic chains having at least 9 C atoms and containing terminal groups which are reactive towards isocyanate, and having molecular weights from 1,000 to 5,000, selected from OH group-containing oligomers or copolymers of unsaturated hydrocarbons having at least 9 C atoms, if appropriate partly hydrolysed copolymers of fatty acid vinyl esters based on carboxylic acids having at least 9 C atoms, hydrolysed or partly hydrolysed copolymers of ethylene and other olefins with acrylates or vinyl esters, if appropriate partly hydrolysed transesterification products of olefin vinyl ester copolymers with fatty acids having $\geq$ 9 C atoms, OH group-containing oligomers of epoxidized oils, OH group-containing oligomers and (co)polymers of acrylates and/or methacrylates of fatty alcohols having $\geq$ 9 C atoms, and OH group-containing polyesters made from di- and/or trimerized fatty acids and di- and polyols having $\geq$ 6 C atoms, are employed.

7. Process according to Claims 1 to 6, characterized in that, as soft segment former C), OH group-containing polyesters made from dimerized oleic acid and hexane-1,6-diol and having molecular weights from 1,200 to 2,500 are employed.

8. Matrix materials based on polyurethane, obtainable by the processes of Claims 1 to7.

9. Use of a mixture of liquid reaction components A), B) and C) according to Claim 1, if appropriate together with fillers and additives, or of a melt made from the still incompletely reacted reaction mixture of A), B) and C), for the production of composite materials by soaking fibre mats, winding mandrels, rovings or fibre strands and shaping the materials, optionally present in prepreg form, with subsequent thermal curing and, if appropriate, conditioning at temperatures of 140 to 220°C.

**Revendications**

1. Procédé de préparation de matériaux de gangue ou d'objets moulés à base de polyuréthannes par réaction de:

A) des phénols au moins bifonctionnels avec

B) des isocyanates aromatiques au moins difonctionnels, et

C) 1 à 40% en poids, par rapport à A) + C), de formeurs de segments mous contenant des groupes réactifs à l'égard des isocyanates, ayant des poids moléculaires de 800 à 10 000, qui contiennent au moins 6 groupes alkylène à au moins 6 atomes de carbone et qui, dans le cours de la réaction avec A) et B), conduisent à une gangue polymère à au moins deux phases, le cas échéant avec utilisation conjointe de

D) des matières de charge et d'autres additifs usuels de la chimie des polyuréthannes,

dans lequel les composants A) + B) + C) sont mélangés à l'état fondu ou à l'état dissous et le cas échéant avec adjonction de fibres, de matières de charge et d'autres additifs usuels en quantités telles que, par rapport aux groupes réactifs avec les isocyanates de A) + C), on dispose de 90 à 130 équivalents % de groupes NCO de B), on introduit le cas échéant le mélange dans des moules puis on fait réagir à température élevée et le cas échéant on recuit les objets moulés à une température de 140 à 220°C.

2. Procédé selon la revendication 1, caractérisé en ce que l'on utilise en tant que composant A) des phénols polycycliques bifonctionnels de formule générale

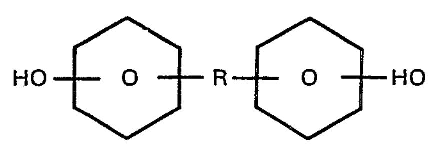

dans laquelle R représente une liaison simple ou -O-, -S-, -SO-, $-SO_2-$, -NR'-, $-Si(R'')_2-$, -CO-, -O(CO)O-, -NN-, -CHR'-, -R'CR'-, $-C_6H_4-$, $-OC_6H_4O-$ ou $-O(C_6H_4R'''O)_n-$, $-O(POCH_3)O-$, $-O(POC_6H_5)O-$, $-O(COC_6H_4R'''O)_n-$ dans lesquels R' représente H ou

un groupe aliphatique ou aromatique, R'' représente un groupe aliphatique, cycloaliphatique ou aromatique, R''' représente un groupe alkylène, cycloalkylène ou arylène et n est égal 1, 2 ou 3,

des bisphénols du type de la phénol-phtaléine, le 3,6-dihydroxy-9,9-diméthylxanthène, le N,N'-bis--hydroxyphényl-bis-imide de l'acide pyromellitique ou le bis-hydroxy-tétraméthyl-spiroindane ou leurs mélanges, éventuellement avec une proportion allant jusqu'à 15% en poids de phénols de fonctionnalité supérieure à 2.

3. Procédé selon les revendications 1 ou 2, caractérisé en ce que l'on utilise en tant que composant A) des bisphénols de point de fusion inférieur à 200°C choisis dans la série du 4,4'-dihydroxydiphénylpropane, de l'éther 4,4'-dihydroxyphénylique ou de la 4,4'-dihydroxydiphénylsulfone ou de leurs mélanges.

4. Procédé selon les revendications 1 à 3, caractérisé en ce que l'on utilise en tant que composant B) le 4,4'-diisocyanatodiphénylméthane et/ou les mélanges de polyisocyanates techniques obtenus par phosgénation de condensats aniline-formaldéhyde, l'éther 4,4'-, 2,4'- et/ou 2,2'-diisocyanatodiphénylylique, la 4,4'-, la 2,4'- et/ou la 2,2'-diisocyanatodiphénylcétone, les carbonates de 4,4'-, de 2,4'- et/ou de 2,2'-diisocyanatodiphényle, la 4,4'-, la 2,4'- et/ou la 2,2'-diisocyanatodiphénylsulfone ou le 4,4'-, le 2,4'- et/ou le 2,2'-diisocyanatodiphényléthane, les bis-(4-isocyanatophénoxy)-alcanes ou les napthylène-diisocyanates ou leurs mélanges.

5. Procédé selon les revendications 1 à 4, caractérisé en ce que l'on utilise en tant que composant A) le 4,4'-dihydroxydiphénylpropane et en tant que composant B) des mélanges techniques de MDI.

6. Procédé selon les revendications 1 à 5, caractérisé en ce que l'on utilise en tant que formeurs de segments mous C), en proportions de 3 à 30% en poids par rapport à A) + C), des composés contenant des chaînes aliphatiques à au moins 9 atomes de carbone, à groupes terminaux réactifs avec les isocyanates et à des poids moléculaires de 1000 à 5000, choisis parmi:

les oligomères ou copolymères, portant des groupes OH, d'hydrocarbures insaturés à au moins 9 atomes de carbone, les copolymères éventuellement saponifiés en partie d'esters vinyliques d'acides gras à base d'acides carboxyliques à au moins 9 atomes de carbone, les copolymères saponifiés ou partiellement saponifiés de l'éthylène et d'autres oléfines avec des esters acryliques ou vinyliques, des produits de transestérification, éventuellement saponifiés en partie, de copolymères oléfine-ester vinylique par des acides gras à au moins 9 atomes de carbone, des oligomères, portant des groupes OH, d'huiles époxydées, des oligomères et (co)polymères, portant des groupes OH, d'acrylates et/ou de méthacrylates d'alcools gras à au moins 9 atomes de carbone et des polyesters, portant des groupes OH, d'acides gras di- et/ou trimérisés et de di- et/ou poly-ols contenant au moins 6 atomes de carbone.

7. Procédé selon les revendications 1 à 6, caractérisé en ce que l'on utilise en tant que formeurs de segments mous C) des polyesters, portant des groupes OH, à base de l'acide oléïque dimérisé et de l'héxane-diol-1,6, à des poids moléculaires de 1200 à 2500.

8. Matériaux de gangue à base de polyuréthannes, obtenus par les procédés des revendications 1 à 7.

9. Utilisation d'un mélange de composant de réaction liquides A), B) et C) selon la revendication 1, éventuellement avec des matières de charge et des additifs, ou d'une masse fondue du mélange de réaction A), B) et C) qui n'a pas encore entièrement réagi, pour la préparation de matériaux composites par imprégnation de nappes de fibres, de pelotes, de rovings ou de mèches de fibres et moulage des masses éventuellement à l'état de prépregs, suivie du durcissement à la chaleur et le cas échéant d'un recuit à des températures de 140 à 220°C.